# EUROPÄISCHE PATENTANMELDUNG

(11) **EP 2 418 846 A2**
(43) Veröffentlichungstag der Anmeldung: **15.02.2012**
(21) Anmeldenummer: 11177208.3
(22) Anmeldetag: 11.08.2011
(51) Int. Cl.: H04N 5/341, H04N 3/08

(54) **Verfahren und Vorrichtung zur korrigierten radiometrischen Messung von Objektpunkten auf Oberflächen von Himmelskörpern**

(30) Priorität: 12.08.2010 DE 102010034318
(71) Anmelder: Jena-Optronik GmbH, 07745 Jena (DE)
(72) Erfinder: Pillukat, Alexander, Dr., 07745 Jena (DE)
(74) Vertreter: Freitag, Joachim

(57) **Zusammenfassung**

Verfahren und Vorrichtung zur flugkörpergestützten korrigierten radiometrischen Messung von in einer Objektszene (2) vorhandenen Objektpunkten (iₘₙ), wobei Intensitäten der abgebildeten Objektpunkte (iₘₙ) als Bildpunkte (Bₘₙ) aufgenommen werden und durch das Detektorelement (8a bis 8g) zu jedem Aufnahmezeitpunkt ein Aufnahmefeld (6) erfasst ist, dadurch gekennzeichnet, dass die Ansteuerungsfunktion (A(ΔLᵢ)) auf Basis von durch systematisch auftretende örtliche und zeitliche Änderungen einer Scanbewegung des Detektors (8) bedingte Aufnahmefehler erzeugt ist, dass aus der gespeicherten Ansteuerungsfunktion (A(ΔLᵢ)) in der Detektorsteuerung (9) Steuersignale für den Detektor (8) zu Triggerzeitpunkten generiert werden, wobei die Triggerzeitpunkte entlang der Messlinie (5) so definiert sind, dass die Messung jedes Objektpunkts (iₘₙ) dann erfolgt, wenn sein Bildpunkt (Bₘₙ) in der Bildebene (4) örtlich mit dem Aufnahmefeld (6) eines der Messlinie (5) zugeordneten Detektorelements (8a bis 8g) übereinstimmt und dass jedes Detektorelement (8a bis 8g) für die Aufnahme eines betreffenden Bildpunkts (Bₘₙ) mit dem entsprechend definierten Triggerzeitpunkt angesteuert wird.

## Beschreibung

Die Erfindung betrifft ein Verfahren und eine Vorrichtung zur flugkörpergestützten radiometrischen Messung von in einer Objektszene vorhandenen Objektpunkten der Oberfläche eines Himmelskörpers, die bei einer systematisch in einer ersten Scanrichtung und einer zweiten Scanrichtung fortschreitenden Abtastung Zeilen und Spalten einer Objektmatrix zugeordnet werden, wobei die Objektmatrixpunkte in einer, von einer Optik erzeugten, Bildebene auf einem Detektor abgebildet werden und die Abbildung innerhalb der Bildebene mit mindestens einem strahlungsempfindlichen Detektorelement des Detektors aufgenommen werden.

Bei der radiometrischen Messung von Objektpunkten der Oberfläche eines Himmelskörpers von Trägersystemen wie Flugzeugen, Raumschiffen oder Satelliten aus stellt sich regelmäßig die Aufgabe, wie die z. B. durch die Struktur und Form der Oberfläche bedingte Verzerrungen der die Objektpunkte abbildenden Bildpunkte korrigiert werden können.

Von einer Vielzahl technischer Lösungen zur Korrektur solcher Verzerrungen seien hier nur zwei beispielhaft angeführt. Aus der WO 2007/130871 A2 ist ein optischer Adapter zur Verwendung bei satellitengestützten Bildaufnahmen bekannt, durch den Verzerrungen in einem aufgenommenen Bild nachträglich korrigiert werden und ein verzerrungsfreies Endbild bereitgestellt werden kann.

Eine Korrektur von Verzerrungen anhand der Nutzung von Referenzbildern ist in der DE 103 54 752 A1 offenbart, bei der aus einer Anzahl von Passpunkten eine Abbildungsfunktion abgeleitet und für die Korrektur verwendet wird. Ein solcher Lösungsansatz, der auf eine nachträgliche Korrektur der Bildpunkte abzielt, wird weit verbreitet angewendet. Der Informationsgehalt einzelner, punktförmiger Bildpunkte wird verändert, z. B. gemittelt oder umgerechnet. Durch Korrekturen, die nach einer Aufnahme erfolgen, können zwar weitestgehend verzerrungsfreie Wiedergaben der Objektpunkt erreicht werden, jedoch geht die "Identität" eines Objektpunkts, also die tatsächlich gemessenen Ausprägungen seiner Eigenschaften, verloren.

Besonders ungünstig wirken sich Abbildungsfehler aus, wenn im Rahmen einer sogenannten Co-Registrierung definierte Objektpunkte durch mehrere, z. B. zeilenförmige oder flächige Detektoren zeitlich nacheinander gemessen werden. Solche Abbildungsfehler können sich, insbesondere bei einer Messung in äquidistanten Zeitschritten, additiv überlagern.

In der DE 10 2008 030 727 A1 wird deshalb ein Verfahren beschrieben, mit dem bei der Beobachtung von Himmelskörpern mittels satellitengestützter Instrumente auftretende Abbildungsfehler bereits bei der Bildaufnahme minimiert werden. Die Abbildungsfehler sind durch die Oberflächenkrümmung und der Rotationsbewegung des Himmelskörpers und/oder der Flugbewegung des beobachtenden Instruments bedingt. Eine Minimierung erfolgt mittels unterschiedlich großer Sensorpixel sowie durch zeitlich veränderliche Zusammenfassungen von mehreren Detektorelementen. Zusätzlich können die oben genannten Verfahren zur Reduzierung von Abbildungsfehlern angewendet werden.

Neben den angeführten Abbildungsfehlern können Fehler bei der für eine Messung nötigen Aufnahme von Bildpunkten auftreten, die darauf beruhen, dass Detektorelemente eines Detektors aufgrund ihrer Anordnung, ihrer Größe oder einer Bewegung des Detektors zu einem Aufnahmezeitpunkt den zu messenden Bildpunkten nicht ausreichend präzise zugeordnet sind (Aufnahmefehler). Dabei sind diejenigen räumlichen Bereiche, über die ein Detektorelement Informationen in einer Bildebene erfassen kann (Aufnahmefeld) nicht genügend mit einem Bildpunkt eines zu dem Aufnahmezeitpunkt zu messenden Objektpunkt in Deckung. Eine wichtige Gruppe von Aufnahmefehlern sind neben zufälligen und spontanen Aufnahmefehlern solche, die in einer vorhersehbaren Weise und Größe (systematisch) auftreten.

Eine vorbekannte Hochleistungskamera HRSC (High Resolution Stereo Camera), die von R. JAUMANN et al. in: DLR Nachrichten 116, 2006, 20-27 beschrieben ist, wird in der Marssonde Mars Express seit 2004 zur dreidimensionalen Vermessung der Oberfläche des Mars eingesetzt. Dabei umkreist eine Sonde den Mars und misst Eigenschaften von Objektpunkten mittels eines Messkopfes mit neun CCD-Zeilen, von denen fünf für Stereo- und Photometrieaufnahmen und die verbleibenden vier für Aufnahmen in unterschiedlichen Spektralbereichen verwendet werden. Dabei sind die Detektoren quer zur Flugrichtung und parallel zueinander in der Bildebene eines Objektivs angebracht. Jede Zeile nimmt daher die Objektpunkte zeitlich versetzt auf. Jede der Detektorzeilen besitzt ca. 5200 Pixel (Detektorelemente), mit denen jeweils ein Objektpunkt gemessen wird. Mit dieser Hochleistungskamera sollen höchst präzise geometrische und radiometrische Messungen durchgeführt werden. Dabei ist allerdings nicht ersichtlich, dass jeder Objektpunkt auf der Oberfläche des Himmelskörpers örtlich und zeitlich korrekt zugeordnet von den entsprechenden Detektorelementen jeder der neun Detektorzeilen gemessen wird, um die zusammen gehörigen Pixeldaten nachfolgend zur Überdeckung zu bringen (Co-Registrierung). Die korrekte zeitliche und örtliche Überdeckung der zusammengehörigen Pixeldaten ist aber aufgrund von Aufnahmefehlern, die sich infolge der unterschiedlichen Lage der Detektoren in der Bildebene des Objektivs ergeben, nicht für alle Pixel zu gewährleisten.

Aufnahmefehler, die durch systematisch auftretende örtliche und zeitliche Änderungen einer Scanbewegung des Detektors bedingt sind, also im Wesentlichen von der konstruktiven Gestaltung des aufnehmenden, technischen Systems abhängen, sind im Verhältnis zu oberflächenkrümmungsbedingten Abbildungsfehlern relativ gering, beeinflussen jedoch immer noch sehr nachteilig die erzielbare Qualität (pixelgenaue Co-Registrierung) der Messungen.

Der Erfindung liegt die Aufgabe zugrunde, eine Möglichkeit zur flugzeug- und satellitengestützten radiometrischen Messung von Objektpunkten der Oberfläche eines Himmelskörpers zu finden, durch welche durch systematisch auftretende örtliche und zeitliche Änderungen einer Scanbewegung des Detektors bedingte Aufnahmefehler minimiert und die Identitäten der Messungen der Objektpunkte gewahrt werden.

Die Aufgabe wird bei einem Verfahren zur flugkörpergestützten korrigierten radiometrischen Messung von in einer Objektszene vorhandenen Objektpunkten der Oberfläche eines Himmelskörpers, die bei einer systematisch in einer ersten Scanrichtung und einer zweiten Scanrichtung fortschreitenden Abtastung Zeilen und Spalten einer Objektmatrix zugeordnet werden, wobei die Objektpunkte in einer Bildebene auf einen Detektor als Bildpunkte abgebildet werden und die Bildpunkte innerhalb der Bildebene mit mindestens einem strahlungsempfindlichen Detektorelement des Detektors aufgenommen werden, wobei durch das Detektorelement zu jedem Aufnahmezeitpunkt ein Aufnahmefeld erfasst wird, dadurch gelöst,
- dass vor Beginn des Messvorgangs durch systematisch auftretende örtliche und zeitliche Änderungen einer Scanbewegung des Detektors bedingte Aufnahmefehler des Detektors, bezogen auf Punkte einer Messlinie, entlang derer die Bildpunkte aufgenommen werden, als relative Lageabweichungen des Aufnahmefeldes von den Punkten der Messlinie, ermittelt werden,
- dass eine Ansteuerungsfunktion auf Basis der relativen Lageabweichungen entlang der Messlinie in Form von Triggerzeitpunkten, in denen Messungen der einzelnen Objektpunkte zeitlich unterschiedlich ausgelöst werden, generiert wird, wobei die Triggerzeitpunkte entlang der Messlinie so definiert werden, dass die Messung jedes Objektpunkts dann erfolgt, wenn sein Bildpunkt örtlich mit einem Aufnahmefeld eines der Messlinie zugeordneten Detektorelements übereinstimmt und
- die Ansteuerungsfunktion gespeichert und einer Detektorsteuerung des Detektors für aufeinanderfolgende Messungen entlang der Messlinie zur Verfügung gestellt wird, so dass über die Messlinie zeitsynchronisierte Messungen von allen Objektpunkten jeder Zeile der Objektmatrix durchgeführt werden.

Durch systematisch auftretende örtliche und zeitliche Änderungen einer Scanbewegung des Detektors bedingte Aufnahmefehler im Sinne der Erfindung sind Fehler bei der Aufnahme der Bildpunkte, die durch den Aufbau und den Bewegungsablauf des für die Messung verwendeten Detektors bedingt sind. Solche Änderungen können beispielsweise systematisch auftretende Beschleunigungs- und Bremsphasen eines zeilenweise abtastenden Scanners oder eines Spiegelscanners, dessen Rotationsachse nicht in der Spiegelebene liegt, sein. Systematisch auftretende Änderungen einer Scanbewegung des Detektors sind hier solche, deren örtlicher und/oder zeitlicher Verlauf entlang einer Messlinie konstruktiv bedingt und in der Regel theoretisch bekannt sind.

Die tatsächliche Ausprägung der Aufnahmefehler können sowohl theoretisch als auch empirisch mittels eines geeigneten Versuchsaufbaus ermittelt werden. Aufnahmefehler resultieren in relativen Lageabweichungen des Aufnahmefelds eines Detektors entlang der Messlinie und bezüglich von Punkten der Messlinie. Jedem Bildpunkt ist ein Punkt auf der Messlinie eineindeutig zugeordnet.

Die Verwendung des Begriffs der ersten und zweiten Scanrichtung impliziert hier nicht, dass Bildpunkte ausschließlich nacheinander aufgenommen werden. Es können auch mehrere Bildpunkte zeitgleich oder in einer beliebigen Reihenfolge aufgenommen werden.

Als Ausgangslage zur Feststellung der relativen Lageabweichungen wird vorzugsweise eine Lagebeziehung von Bildebene und Detektor zueinander verwendet, in der bei Nichtvorhandensein von Aufnahmefehlern alle Bildpunkte und alle Aufnahmefelder genau entlang der Messlinie ausgerichtet wären.

Die erste Scanrichtung kann die Richtung einer Flugbewegung sein. Als eine zweite Scanrichtung kann die Bewegung eines Detektorelements, z. B. eines Scanners, in einer anderen als der ersten Scanrichtung, beispielsweise quer zur ersten Scanrichtung, definiert sein.

Die Messlinie ist vorteilhaft in der Bildebene entlang der ersten oder der zweiten Scanrichtung definiert. Sie kann jedoch auch aus Kombinationen der ersten und der zweiten Scanrichtung bestehen. Ihre Form ist vorzugsweise linear, kann aber auch z. B. geschwungen oder abgewinkelt sowie kontinuierlich oder unterbrochen definiert sein.

Relative Lageabweichungen werden bezüglich einer bestimmten Messlinie jeweils für diejenigen Aufnahmefelder erfasst, welche ohne dem Vorhandensein von Aufnahmefehlern zumindest zeitweise auf der Messlinie abgebildet würden.

Die relativen Lageabweichungen der Aufnahmefelder werden hinsichtlich zweier Parameter erfasst: erstens wird für jedes Aufnahmefeld dessen Abstand und Lage zur Position des aufzunehmenden Bildpunkts auf der Messlinie ermittelt und gespeichert. Zweitens wird festgestellt, ob das betrachtete Aufnahmefeld, die Messlinie bereits überschritten hat (Vorauseilen), auf der Messlinie liegt oder die Messlinie noch nicht erreicht hat (Nacheilen). Die Erfassung der relativen Lageabweichungen erfolgt als Wertepaar genau dieser spezifischen örtlichen Lagebeziehung von Bildpunkt und Aufnahmefeld. Eine andere Lage von Bildpunkt und Aufnahmefeld, z. B. bei Erfassung einer anderen Zeile der Bildebene, führt zu einem weiteren, zeilenspezifischen, Datensatz relativer Lageabweichungen. In weiteren Ausführungen des erfindungsgemäßen Verfahrens kann ein Voraus- bzw. Nacheilen auch bezüglich von Punkten der Messlinie festgestellt werden. Dies ist dann von Bedeutung, wenn relative Lageabweichungen entlang der Messlinie auftreten.

Die erfassten relativen Lageabweichungen werden vorzugsweise über die Länge der Messlinie jeweils eineindeutig einem Punkt der Messlinie zugeordnet. Durch eine solche Zuordnung ist eine diskrete Zuordnung gegeben, die mittels Interpolation in eine, vorzugsweise stetige, Ansteuerungsfunktion überführt werden kann.

Es ist auch möglich, die diskrete Zuordnung der Aufnahmefelder zu Punkten der Messlinie als eine unstetige Fehlerfunktion auszudrücken. Diese kann dann mittels bekannter mathematischer Regeln in eine stetige Fehlerfunktion überführt werden. Eine stetige Fehlerfunktion kann in vorteilhafter Weise als Basis für eine weitaus größere Anzahl von möglichen Ansteuerungsfunktionen dienen als eine unstetige Fehlerfunktion.

Die relative Lageabweichung muss dabei nicht von jedem Aufnahmefeld erfasst werden. Insbesondere bei sich gleichmäßig aufeinanderfolgend ändernder relativer Lageabweichungen sowie bei symmetrischer Verteilung dieser entlang der Messlinie kann eine geringere Anzahl von Aufnahmefeldern für die Erzeugung einer diskreten Zuordnung ausreichend sein. So können beispielsweise die relativen Lageabweichungen von lediglich jedem dritten Aufnahmefeld oder - bei symmetrisch auftretenden Abweichungen - von einem Wert pro Paar symmetrisch abweichender Aufnahmefelder erfasst werden.

Die Aufnahmefelder können aufgrund der Scanbewegung in mindestens einer der genannten Scanrichtungen entlang der Messlinie und über diese hinweggeführt werden. Die Lagebeziehung der Messlinie zur Bildebene bleibt dabei konstant.

Ferner kann die Messlinie in der Bildebene bei verschiedenen Messvorgängen verschiedene Lagen einnehmen. Es können auch mehrere Messlinien vorhanden sein. Für jede Lage der Messlinie innerhalb der Bildebene kann eine eigene diskrete Zuordnung der relativen Lageabweichungen erfasst und eine eigene Ansteuerungsfunktion generiert werden.

Die Ansteuerungsfunktion wird generiert, indem für jeden Bildpunkt die zu der relativen Lageabweichung korrespondierende zeitliche Abweichung des Zusammenfallens des Aufnahmefelds mit der als Bezug gewählten Messlinie oder dem als Bezug gewählten Punkt der Messlinie als Funktionswert der Ansteuerungsfunktion ermittelt wird. Dabei gehen ein Voraus- bzw. ein Nacheilen der jeweiligen Aufnahmefelder in die Ansteuerungsfunktion ein. Die Ansteuerungsfunktion kann sowohl als stetige als auch als unstetige Funktion generiert werden.

Mittels des erfindungsgemäßen Verfahrens kann sowohl eine Korrektur von durch örtliche und zeitliche Änderungen einer Scanbewegung des Detektors bedingten Aufnahmefehlern in der ersten Scanrichtung als auch in der zweiten Scanrichtung, sowie in Kombination beider Scanrichtungen durchgeführt werden.

Es ist ferner möglich, dass neben den durch systematisch auftretende örtliche und zeitliche Änderungen einer Scanbewegung des Detektors bedingte Aufnahmefehler zusätzlich systemisch bedingte Abbildungsfehler durch die Ansteuerungsfunktion mit berücksichtigt werden. Systemisch bedingte Abbildungsfehler sind durch Form, Größe und Aufbau der für die Messung verwendeten Optik (z. B. verzerrte Lage von Bildpunkten in der Bildebene) bedingt.

In weiteren, vorteilhaften Ausführungen des Verfahrens können in die Ansteuerungsfunktion weitere, nicht durch systematisch auftretende örtliche und zeitliche Änderungen einer Scanbewegung des Detektors bedingte, spontan auftretende Abbildungsfehler eingehen.

Spontan auftretende Aufnahmefehler können beispielsweise durch wechselnde, nicht vorhersehbare (zufällige) Änderungen von Lagebeziehungen des Detektors zur Bildebene (z. B. Vibrationen) bedingt sein, welche beispielweise von der Bewegung einer die Optik tragenden Einheit (z. B. einem Flugzeug) herrühren können. Damit ist eine dynamisch erfolgende Korrektur der radiometrischen Messungen durch eine fortlaufende Anpassung der Ansteuerungsfunktion auch während der Durchführung des erfindungsgemäßen Verfahrens möglich.

Ein solche Erfassung kann beispielweise durch geeignete Messmittel wie Lagesensoren erfolgen.

Die Messungen entlang der Messlinie können für jeden Objektpunkt entlang der Messlinie zeitlich separat getriggert werden. Dabei kann ein Detektorelement entlang der Messlinie über die Bildpunkte der Objektpunkte geführt oder eine Anordnung (Array) von Detektorelementen getriggert werden.

Eine vorteilhafte und effiziente Ausführung des erfindungsgemäßen Verfahrens besteht darin, dass Gruppen von ausgewählten Bildpunkten gebildet werden, deren jeweilige Aufnahmefelder relativen Lageabweichungen aufweisen, die geringer als ein vorbestimmter Schwellwert sind und die Messungen der Objektpunkte einer Gruppe gleichzeitig getriggert werden.

Die Messungen der jeweiligen Gruppen kann entlang der Messlinie zeitlich separat getriggert werden. Solche Gruppen von definiert angeordneten Objektpunkten können entlang der Messlinie sowohl zueinander benachbart angeordnete als auch nicht benachbart angeordnete Objektpunkte sein, die dadurch bestimmt sind, dass sich die relativen Lageabweichungen der Bildpunkte von Objektpunkten innerhalb einer Gruppe höchstens um einen definierten Schwellwert unterscheiden. Darüber hinaus sind weitere Regeln für die Bildung von Gruppen möglich, wobei die Regeln auch dynamisch, beispielsweise an die Ansteuerungsfunktion anpassbar, gestaltet sein können.

Es ist eine vorteilhafte Ausführung des erfindungsgemäßen Verfahrens, wenn die Messungen mehrerer, nicht zusammenhängender Objektpunkte oder Gruppen von Objektpunkten gleichzeitig getriggert werden. So ist es bei einer entlang der Messlinie spiegelsymmetrischen Verteilung der relativen Lageabweichungen zweckmäßig, wenn die Messungen von sich jeweils spiegelbildlich entsprechenden Objektpunkten oder Gruppen von Objektpunkten gleichzeitig getriggert werden.

Eine radiometrische Messung von Objektpunkten oder Gruppen von Objektpunkten erfolgt in der Regel über einen bestimmten Spektralbereich. Sollen mehrere Messungen eines Objektpunkts in dem gleichen oder in unterschiedlichen Spektralbereichen erfolgen, kann der Objektpunkt zeitlich aufeinanderfolgend mehrmals gemessen werden (sog. Co-Registrierung). Die Ansteuerungsfunktionen der für die Co-Registrierung verwendeten Detektoren werden dabei entsprechend der jeweiligen Lage der Messlinie innerhalb der Bildebene erzeugt.

Messungen für dieselben Objektpunkte können zeitlich aufeinanderfolgend mehrmals für verschiedene Messlinien getriggert werden.

Die Messungen der einzelnen Objektpunkte entlang einer Messlinie kann gleichzeitig, sequentiell oder in einer gewählten Reihenfolge durchgeführt werden.

Das erfindungsgemäße Verfahren kann sowohl für Messungen elektromagnetischer Wellen (z. B. Licht) als auch für Teilchenstrahlungen (z. B. Kernstrahlung) angewendet werden.

Das erfindungsgemäße Verfahren kann vorteilhaft in einer integrierten Schaltung, bei der jedes Detektorelement der Detektoren über je eine Signalleitung mit einer Steuerung verbunden und jedes Detektorelement einzeln triggerbar ist, verwendet werden. Es kann ferner in einer integrierten Schaltung, bei der jeweils Gruppen von Detektorelementen des Detektors mit der Detektorsteuerung über jeweils eine Signalleitung verbunden sind, wodurch innerhalb der Gruppen die Messung mehrerer Objektpunkte gleichzeitig triggerbar ist, verwendet werden.

Es kann weiterhin vorteilhaft in einer genannten integrierten Schaltung verwendet werden, bei der außerdem auf mindestens einer Signalleitung mindestens ein Verzögerungsglied angeordnet ist, um ein von der Detektorsteuerung gesendetes Steuersignal in Abhängigkeit von der Ansteuerungsfunktion zu verzögern. Selbstverständlich kann das erfindungsgemäße Verfahren auch verwendet werden, um durch Fehlstellungen von Detektorelementen bedingte Aufnahmefehler zu korrigieren.

Die Aufgabe wird des Weiteren bei einer Vorrichtung zur flugkörpergestützten korrigierten radiometrischen Messung von in einer Objektszene vorhandenen Objektpunkten der Oberfläche eines Himmelskörpers, die bei einer systematisch fortschreitenden Abtastung Zeilen und Spalten einer Objektmatrix zugeordnet sind, mit einer Optik, mit der die Objektpunkte auf einem in einer Bildebene angeordneten Detektor abgebildet sind, wobei Intensitäten der abgebildeten Objektpunkte als Bildpunkte innerhalb der Bildebene mit einem Detektor mit mindestens einem strahlungsempfindlichen Detektorelement zur Erzeugung einer systematisch fortschreitenden Abbildung der Objektmatrix in Bildpunkten aufnehmbar sind, wobei durch das Detektorelement zu jedem Aufnahmezeitpunkt ein Aufnahmefeld erfasst ist, dadurch gelöst, dass
- ein Speicher zur Speicherung einer Ansteuerungsfunktion vorhanden ist, wobei die Ansteuerungsfunktion auf Basis von durch systematisch auftretende örtliche und zeitliche Änderungen einer Scanbewegung des Detektors bedingte Aufnahmefehler erzeugt ist und die Aufnahmefehler als relative Lageabweichungen der Aufnahmefelder, bezogen auf Punkte einer Messlinie, ermittelt sind,
- der Speicher mit einer Detektorsteuerung verbunden ist, um aus der gespeicherten Ansteuerungsfunktion in der Detektorsteuerung Steuersignale für den Detektor zu Triggerzeitpunkten zu generieren, wobei die Triggerzeitpunkte entlang der Messlinie so definiert sind, dass die Messung jedes Objektpunkts dann erfolgt, wenn sein Bildpunkt in der Bildebene örtlich mit dem Aufnahmefeld eines der Messlinie zugeordneten Detektorelements übereinstimmt und
- dass der Detektor mit der Detektorsteuerung verbunden ist, um jedes Detektorelement für die Aufnahme eines betreffenden Bildpunkts mit dem entsprechend definierten Triggerzeitpunkt anzusteuern.

Die Optik kann, je nach zu erfassender Strahlung, Linsen und strahlablenkende Elemente aus z. B. Glas, Kunststoff oder anderen bekannten Stoffen oder Stoffverbünden enthalten. Linsen und strahlablenkende Elemente der Optik können auch als magnetische Linsen und/oder elektrostatische strahlablenkende Elemente ausgebildet sein. Ferner kann der Detektor neben einer Detektion elektromagnetischer Strahlung auch zur Detektion von Teilchenstrahlung geeignet sein. Die erfindungsgemäße Vorrichtung kann, je nach Ausgestaltung, für radiometrische Messungen von sowohl elektromagnetischer Strahlung als auch von Teilchenstrahlung (z. B. Kernstrahlung) verwendet werden.

Der Detektor kann ein oder mehrere Detektorelemente umfassen. Er kann ein Zeilendetektor oder eine Detektormatrix mit in Zeilen und Spalten angeordneten Detektorelementen sein. Der Detektor kann weiterhin ein Scanner sein, der z.B. nach dem sogenannten push-broom- oder nach dem whisk-broom-Verfahren arbeitet.

Die Ausrichtung der Detektorzeile oder der Zeilen einer Detektormatrix erfolgt vorzugsweise orthogonal zur ersten Scanrichtung. In weiteren vorteilhaften Ausführungen der Erfindung können die Detektorelemente auch in der ersten Scanrichtung angeordnet sein.

Es ist ferner möglich, dass Detektorelemente einzeln oder in Gruppen zueinander, z. B. stufenförmig, versetzt angeordnet sind. Dadurch ist vorteilhaft auch eine Verwendung und Anordnung von großen Detektorelementen möglich. Die zueinander versetzten Detektorelemente liegen vorteilhafterweise auf mehreren, zueinander parallelen Messlinien.

Die Ansteuerung des Detektors kann verschiedenartig gestaltet sein. Jedes Detektorelement kann über eine separate Signalleitung mit der Detektorsteuerung verbunden sein, so dass jedes Detektorelement individuell triggerbar ist.

Weiterhin ist es möglich, dass jeweils Gruppen von Detektorelementen des Detektors mit der Detektorsteuerung über jeweils eine Signalleitung verbunden sind, wodurch innerhalb der Gruppen die Messung mehrerer Objektpunkte gleichzeitig triggerbar ist.

Auch kann die erfindungsgemäße Vorrichtung so ausgeführt sein, dass auf mindestens einer Signalleitung mindestens ein Verzögerungsglied angeordnet ist, um ein von der Detektorsteuerung gesendetes Steuersignal in Abhängigkeit von der Ansteuerungsfunktion zu verzögern.

Das mindestens eine Verzögerungsglied kann auf eine bestimmte Verzögerung einstellbar sein. Diese Einstellung kann vor, bei oder nach den Einbau des Verzögerungsglieds erfolgen. Die Einstellung der Verzögerung des Verzögerungsglieds kann als Einstellung eines festen Werts für die Verzögerung erfolgen. In weiteren Ausführungen kann das mindestens eine Verzögerungsglied auch programmierbar sein, so dass die programmierbare Verzögerung sowohl fest eingestellt, als auch während des Betriebs der Vorrichtung dynamisch angepasst werden kann. Letztere Ausführung ist besonders dann vorteilhaft, wenn spontan auftretende Beiträge zu den relativen Lageabweichungen der Aufnahmefelder zu berücksichtigen sind.

Ferner ist es möglich, dass der Detektor mit der Detektorsteuerung über einen Signalbus verbunden ist und adressierbare Detektorelemente aufweist, die mittels adressierter Signale einzeln oder in Gruppen triggerbar sind. Ein solches System adressierbarer Detektorelemente und adressierter Signale kann beispielsweise durch ein serielles Bus-System realisiert sein, wie dies aus der Steuerungstechnik bekannt ist. Vorteilhaft an einer solchen Ausführung ist die geringe Anzahl von benötigten Signalleitungen sowie eine flexible und dynamische Triggerbarkeit von einzelnen Detektorelementen oder Gruppen von Detektorelementen.

Die genannten Ausführungsmöglichkeiten der erfindungsgemäßen Vorrichtung können auch als integrierte Schaltungen (Chip) umgesetzt sein.

Eine Ansteuerungsfunktion kann beispielsweise durch einen analogen Generator, einen digitalen Generator oder eine digitale Tabelle erzeugt sein.

Die Erfindung wird nachfolgend anhand von Ausführungsbeispielen und Zeichnungen näher erläutert. Die Zeichnungen zeigen:
- Fig. 1:: eine Darstellung des Erfindungsprinzips in einer schematischen Übersicht der Abbildungsentstehung;
- Fig. 2:: eine schematische Darstellung a) eines systematisch nichtlinearen zeitlichen Bewegungsablaufs eines Scanners und b) einer für den Ausgleich der nichtlinearen Scanbewegung notwendigen Ansteuerungsfunktion der Triggerzeitpunkte und
- Fig. 3:: eine schematische graphische Darstellung a) der relativen Lageabweichungen entlang einer Messlinie, b) einer erzeugten unstetigen und stetigen Fehlerfunktion und c) einer generierten Ansteuerungsfunktion aus der Fehlerfunktion.
- Fig. 4:: eine schematische graphische Darstellung von Bildpunkten und Gruppen von Bildpunkten,
- Fig. 5:: eine schematische Darstellung a) einer Ausführung der erfindungsgemäßen Vorrichtung mit separaten Signalleitungen für einzelne oder Gruppen von Detektorelementen; b) einer alternativen Ausführung mit einem seriellen Bus-System und c) eine schematische Darstellung einer Ausführung mit Verzögerungsgliedern.

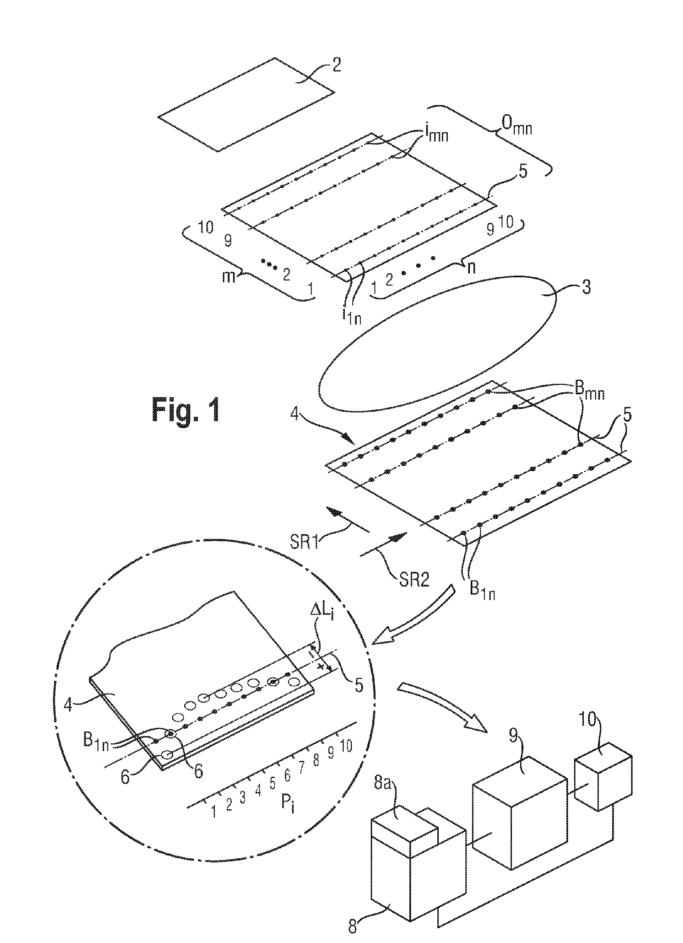

Eine erste Ausführung der erfindungsgemäßen Vorrichtung beinhaltet gemäß Fig. 1 als wesentliche Elemente eine Optik 3, mit der Objektpunkte iₘₙ eines auf der Oberfläche eines Himmelskörpers und in einer Objektszene 2 befindlichen Objekts 1, die bei einer Abtastung, welche in einer ersten Scanrichtung SR1 fortschreitet, Zeilen m und Spalten n einer Objektmatrix Oₘₙ zugeordnet sind, in eine Bildebene 4 als Bildpunkte Bₘₙ abgebildet sind. Es ist ein als ein nach dem whisk-broom-Verfahren arbeitender Scanner ausgebildeter Detektor 8 vorhanden, durch den innerhalb eines Aufnahmefelds 6 Bildpunkte Bₘₙ in der Bildebene 4 entlang einer linearen Messlinie 5 aufnehmbar sind. Jede Messung erfolgt an einem bestimmten Punkt Pᵢ der Messlinie 5, so dass jedem Punkt Pᵢ ein Aufnahmefeld 6 zugeordnet ist. Der Detektor 8 steht mit einer Detektorsteuerung 9 und einem Speicher 10 in Verbindung. Der Detektor 8 weist ein Detektorelement 8a auf, welches entlang der zu den Zeilen m parallelen Messlinie 5 in einer zweiten Scanrichtung SR2 geführt ist und die Bildpunkte Bₘₙ aufnimmt. Das Detektorelement 8a wird in der ersten Scanrichtung SR1 nacheinander über die einzelnen Zeilen m geführt.

In weiteren Ausführungen der Erfindung kann der Detektor 8 ein um eine Achse rotierender Scanner, wie ein Schiefspiegel-Teleskop mit Halbwinkelspiegeln endlicher Dicke, oder ein nach dem sogenannte push-broom-Verfahren arbeitender Scanner sein. Es können andere Anzahlen von Detektorelementen vorhanden sein, die zudem jeweils verschiedene Zeilen m abtasten können.

Der Übersichtlichkeit halber sind die Bildpunkte Bₘₙ in beispielhaft zehn Zeilen m (m = 1...10) und zehn Spalten n (n = 1...10) der Objektmatrix Oₘₙ in Fig. 1 gezeigt. Linear gestaltete Messlinien 5 sind parallel zu den Zeilen m der Objektmatrix Oₘₙ und in Richtung der zweiten Scanrichtung SR2 verlaufend eingerichtet. Die Bildpunkte Bₘₙ werden hier in der Bildebene 4 genau entlang der Messlinien 5 ohne Verzerrungen abgebildet und fallen jeweils mit einem Punkt Pᵢ zusammen.

Zu dem dargestellten Zeitpunkt ist die am weitesten rechts gezeigte Messlinie 5 so eingestellt, dass bei Nicht-Vorliegen von Aufnahmefehlern alle Aufnahmefelder 6 der ersten Zeile m (m = 1) örtlich mit je einem Punkt Pᵢ der Messlinie 5 zusammenfallen.

Tatsächlich weisen die Aufnahmefelder 6 entlang der Messlinie 5 in der Bildebene 4 jedoch relative Lageabweichungen ΔLᵢ bezüglich der Punkte Pᵢ, die den Aufnahmefeldern zugeordnet sind, auf.

Diese relativen Lageabweichungen ΔLᵢ rühren von örtlichen und zeitlichen Änderung der Scanbewegung des Detektors 8 her.

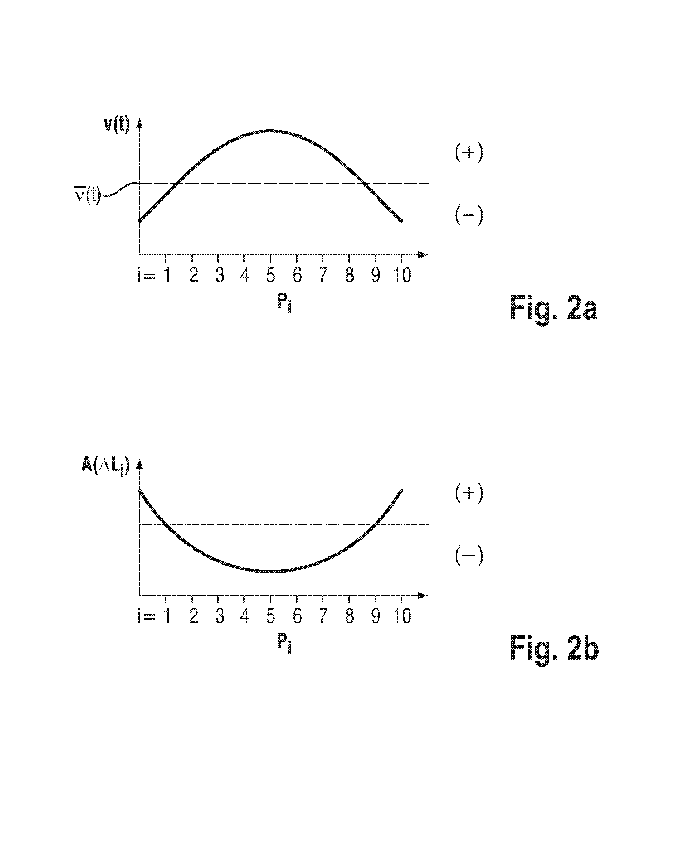

Wie in Fig. 2a dargestellt, unterliegt die Scanbewegung des Detektors 8 (nicht gezeigt) einer örtlichen und zeitlichen Änderung, hier beispielhaft in Form eines spiegelsymmetrischen, parabelförmigen Verlaufs der Bewegungsgeschwindigkeit v(t), die um eine mittlere Bewegungsgeschwindigkeit v(t) schwingt. Eine solche Änderung der Bewegungsgeschwindigkeit v(t) kann auf einer Beschleunigung und einem Abbremsen des Scanners bei der Aufnahme der Bildpunkte Bₘₙ am Anfang und Ende der Messlinie 5 beruhen.

Das Profil der Bewegungsgeschwindigkeit v(t) ist konstruktiv bedingt und daher theoretisch bekannt. Das Aufnahmefeld 6 wird mit der Bewegungsgeschwindigkeit v(t) entlang der Messlinie 5 geführt, wobei seine konkrete Lage auf der Messlinie 5 zu einem Zeitpunkt durch die Funktion der realen Bewegungsgeschwindigkeit v(t) bestimmt ist.

Entlang der Messlinie 5 ist die Lage von Punkten Pᵢ bekannt, welche zu einem bestimmten Zeitpunkt jeweils einer vorgesehenen Lage des Aufnahmefelds 6 zugeordnet sind.

Die Differenz der realen Bewegungsgeschwindigkeit zur mittleren Bewegungsgeschwindigkeit *v̅* (t) wird an den jeweiligen Punkten Pᵢ erfasst, in eine Zeitdifferenz Δt umgerechnet und gespeichert.

Um auch praktisch eine reale Bewegungsgeschwindigkeit v(t) zu ermitteln, werden die relativen Lageabweichungen ΔLᵢ mittels geeigneter Messmittel und Messverfahren als senkrechte Abstände der einzelnen Aufnahmefelder 6 zu den ihnen zugeordneten Punkten Pᵢ der Messlinie 5 erfasst und gespeichert. Dies kann z. B. so geschehen, dass das tatsächliche Profil der Bewegungsgeschwindigkeit v(t) eines Scanners mittels einer hochpräzise getakteten Lichtquelle (nicht gezeigt) vermessen wird. Die Lichtquelle wird als Referenzpunkt hinter dem Scanmechanismus auf die Bildebene 4 abgebildet. In der Bildebene 4 ist eine CCD-Mess-Kamera angeordnet, mit der hochgenau die Lage des abgebildeten Referenzpunkts in der Bildebene 4 vermessen wird. Aus der Abweichung von einer Soll- und einer Istlage wird das Profil der Bewegungsgeschwindigkeit v(t) bestimmt.

Alle relativen Lageabweichungen ΔLᵢ von Aufnahmefeldern 6, bei denen die Aufnahmefelder 6 die entsprechenden Punkte Pᵢ in der ersten Scanrichtung SR1 bereits überschritten haben, also dem Punkt Pᵢ vorauseilen, werden mit einem positiven Vorzeichen "+" indiziert, während alle relativen Lageabweichungen ΔLᵢ, bei denen das Aufnahmefeld den Punkt Pᵢ noch nicht überschritten hat, also dem Punkt Pᵢ nacheilen, mit einem negativen Vorzeichen "-" indiziert sind.

Erfolgt in einer weiteren Ausführung der Erfindung eine Korrektur der radiometrischen Messungen in der zweiten Scanrichtung SR2, so gilt die Zuordnung der Vorzeichen entsprechend. Kommen Aufnahmefelder 6 nicht auf, sondern neben der Messlinie 5 zu liegen, werden ihre relativen Lageabweichungen ΔLᵢ entsprechend ermittelt. Dabei können die Regeln der Vektorrechnung angewendet werden, insbesondere dann, wenn Korrekturen in erster und zweiter Scanrichtung SR1 und SR2 durchgeführt werden.

Eine aus dieser Änderung der Scanbewegung resultierende Ansteuerungsfunktion A(ΔLᵢ) ist schematisch in Fig. 2b gezeigt.

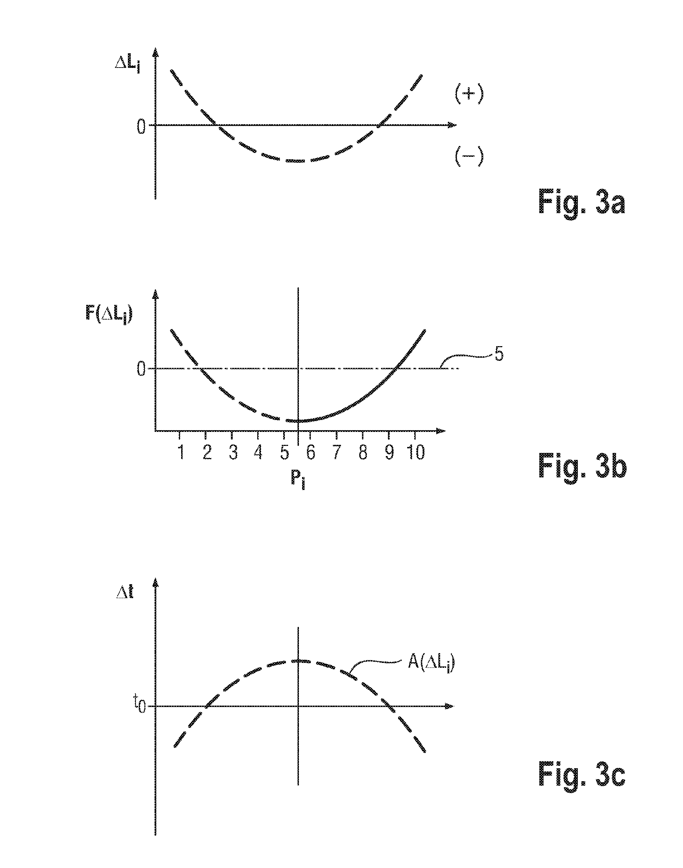

Die beispielhaft in Fig. 3a über der Messlinie 5 aufgetragenen relativen Lageabweichungen ΔLᵢ sind jeweils eineindeutig einem Punkt der Messlinie 5 zugeordnet, wodurch - wie in der linken Hälfte der Fig. 3b gezeigt - eine diskrete Zuordnung (kann auch als unstetige Fehlerfunktion ausgedrückt sein) der relativen Lageabweichungen ΔL**ᵢ** zu Punkten Pᵢ entlang der Messlinie 5 gegeben ist. Durch Interpolation der einzelnen Funktionswerte kann die diskrete Zuordnung (optional) in eine stetige Fehlerfunktion F(ΔLᵢ) überführt werden, wie dies in der rechten Hälfte der Fig. 3b dargestellt ist. Die qualitativ stilisiert gezeichnete Fehlerfunktion F(ΔLᵢ) weist in dem angenommenen Beispiel Nullpunkte (ΔLᵢ = 0) bei x = 2 und 9 sowie einen Scheitelpunkt bei x = 5,5 auf.

Eine Ansteuerungsfunktion A(ΔLᵢ) wird nun dadurch generiert, dass die relativen Lageabweichungen ΔLᵢ unter Nutzung der bekannten Bewegungsgeschwindigkeit v(t) der Scanbewegung in der zweiten Scanrichtung SR2 in Zeitdifferenzen Δt umgerechnet werden, wobei die jeweiligen Vorzeichen erhalten bleiben (vorauseilende Aufnahmefelder 6 weisen positive, nacheilende Aufnahmefelder 6 weisen negative Vorzeichen auf). Ein Zeitpunkt t₀ wird als Referenzzeitpunkt für den jeweiligen Punkt Pᵢ definiert. Zu diesem Zeitpunkt t₀ fällt das Aufnahmefeld 6, das keinem systematischen Aufnahmefehler unterliegt (hier: das zweite und neunte Aufnahmefeld 6), mit dem Punkt Pᵢ zusammen.

Die Ansteuerungsfunktion A(ΔLᵢ) kann in weiteren Ausführungen der Erfindung auch unter Nutzung der Fehlerfunktion F(ΔLᵢ) generiert werden.

Jedem Punkt Pᵢ der Messlinie 5 wird eine Zeitdifferenz Δt zugeordnet. Vorauseilende Aufnahmefelder 6 fallen bereits vor dem Zeitpunkt t₀, nacheilende Aufnahmefelder 6 später als der Zeitpunkt t₀ mit dem Punkt pᵢ zusammen. Für jeden Punkt Pᵢ der Messlinie 5 wird ein Triggerzeitpunkt definiert, indem die jeweilige Zeitdifferenz Δt des Punktes Pᵢ von t₀ subtrahiert wird. Dabei führen Zeitdifferenzen Δt mit positivem Vorzeichen zu Triggerzeitpunkten, die zeitlich vor dem Zeitpunkt t₀ liegen, während Zeitdifferenzen Δt mit negativem Vorzeichen zu Triggerzeitpunkten nach dem Zeitpunkt t₀ führen, wie dies in Fig. 2c gezeigt ist. Die Ansteuerungsfunktion A(ΔLᵢ) wird somit als Zuordnung von Triggerzeitpunkten zu Punkten Pᵢ der Messlinie 5 generiert.

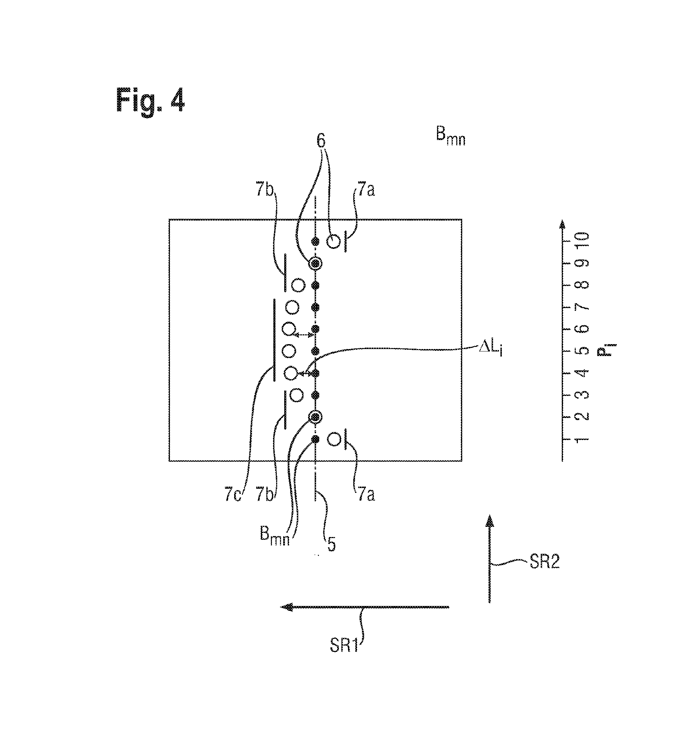

In einer modifizierten und in Fig. 4 gezeigten Ausführung des erfindungsgemäßen Verfahrens können Gruppen 7 von Bildpunkten Bₘₙ zusammengefasst werden, bei denen die relativen Lageabweichungen ΔLᵢ ihrer Aufnahmefelder 6 um nicht mehr als einen vorgegebenen Schwellwert differieren.

Zur Veranschaulichung dieses Sachverhalts sind Bildpunkte Bₘₙ gezeigt, deren Aufnahmefelder 6 relative Lageabweichungen ΔLᵢ aufweisen, welche spiegelsymmetrisch zu einer mittig der Messlinie 5 liegenden Orthogonalen angeordnet sind und senkrecht zu den jeweiligen Punkten Pᵢ der Messlinie 5 liegen. Dabei sind die relativen Lageabweichungen ΔLᵢ der Aufnahmefelder 6 an den nicht benachbart liegenden Punkten Pᵢ mit i = 1 und i = 10 in Betrag und Vorzeichen gleich. Die Differenzen der relativen Lageabweichungen ΔLᵢ der Aufnahmefelder 6 an den jeweils benachbart liegenden Punkten Pᵢ mit i = 2 und i = 3 sowie i = 8 und i = 9 überschreiten einen bestimmten Schwellwert (z. B. Schwellwert = 1) nicht. Ebenso sind die relativen Lageabweichungen ΔLᵢ der Aufnahmefelder 6 an den Punkten Pᵢ mit i = 4, 5, 6 und 7 mit ΔLᵢ = 0,5 unterhalb des vorbestimmten Schwellwerts.

Den beschriebenen Gruppen 7 wird jeweils eine Zeitdifferenz Δt und ein Triggerzeitpunkt zugewiesen, die aufgrund einer mittleren relativen Lageabweichung ΔLᵢ der jeweiligen Gruppe 7 berechnet werden.

Die generierte Ansteuerungsfunktion A(ΔLᵢ) bezieht sich auf die Gruppe 7a und 7a' von korrespondierenden Aufnahmefeldern 6 der Punkte Pᵢ mit i = 1 und i = 10 und die Gruppe 7b und 7b' von korrespondierenden Aufnahmefeldern 6 der Punkte Pᵢ mit i = 2; 3 und i = 8; 9 sowie auf die Gruppe 7c aus Aufnahmefeldern 6 von zusammenhängenden Punkten Pᵢ mit i = 4; 5; 6; 7.

Es ist sinnvoll, die Gruppen 7 anhand der Zeitdifferenzen Δt oder der resultierenden Triggerzeitpunkte festzulegen.

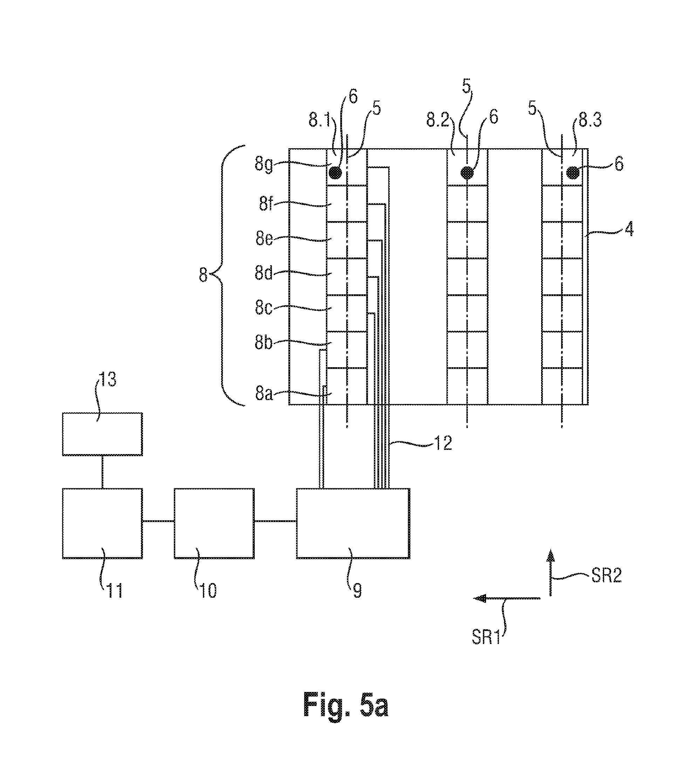

Wie in Fig. 5a schematisch gezeigt, wird die Ansteuerungsfunktion A(ΔLᵢ) mit Hilfe eines Funktionsgenerators 11 erzeugt, im Speicher 10 abgelegt und durch die Detektorsteuerung 9 in Steuersignale übersetzt. Durch die Detektorsteuerung 9, die mit dem Detektor 8 verbunden ist, werden die Messungen der Objektpunkte iₘₙ zu den durch die Ansteuerungsfunktion A(ΔLᵢ) entlang des Messlinie 5 generierten Triggerzeitpunkten getriggert.

In einer weiteren Ausgestaltung der Erfindung werden von einer Antriebseinheit 13 verursachte Abweichungen von den Normparametern (z.B. Fluggeschwindigkeit, Flughöhe etc.) an den Funktionsgenerator 11 übermittelt und gehen in die Ansteuerungsfunktion A(ΔLᵢ) ein.

Die Detektorsteuerung 9 löst zeitlich versetzte Messungen der Objektpunkte iₘₙ einer Objektmatrix Oₘₙ aus, wenn die Aufnahmefelder 6 vorbestimmte Punkte Pᵢ der vorbestimmten Messlinie 5 erreichen und von einem der sieben Detektorelemente 8a bis 8g ausgelesen werden können. Die erfassten Messwerte der Objektpunkte iₘₙ werden dann im Speicher 10 abgelegt und stehen dort für weitere Auswertungen (z. B. Co-Registrierung) oder zur Weiterleitung an eine weitere datenverarbeitende Einheit (nicht gezeigt) zur Verfügung.

In einer Ausführung der erfindungsgemäßen Vorrichtung gemäß Fig. 5a umfasst der Detektor 8 drei, nämlich einen ersten, einen zweiten und einen dritten Zeilendetektoren Zeilendetektoren 8.1 bis 8.3, die zur vereinfachten Darstellung jeweils mit je sieben Detektorelementen 8a bis 8g ausgestattet sind (Array). Die Zeilendetektoren 8.1 bis 8.3 sind parallel zum Verlauf der Zeilen m der Objektmatrix Oₘₙ in der zweiten Scanrichtung SR2 und orthogonal zur ersten Scanrichtung SR1 angeordnet. Jedem Zeilendetektor 8.1 bis 8.3 ist jeweils eine Messlinie 5 zugeordnet. Jedes Detektorelement 8a bis 8g ist über je eine eigene Signalleitung 12 bis mit der Detektorsteuerung 9 verbunden (nur für den ersten Zeilendetektor 8.1 gezeigt), die ihrerseits über den Speicher 10 mit dem Funktionsgenerator 11 und mit der Antriebseinheit 13 in Verbindung steht. Die Antriebseinheit 13 soll hier - ohne Beschränkung der Allgemeinheit - ein Flugzeug sein, durch dessen Flugbewegung relativ zur Erdoberfläche eine Bewegung entlang der ersten Scanrichtung SR1 zwischen Messlinie 5 und Objektmatrix Oₘₙ verursacht ist. Die Antriebseinheit 13 kann aber auch ein Satellit, ein Raumschiff, ein unbemanntes Flugobjekt oder aber ein Scanner sein. Außer auf der Erde sind radiometrische Messungen natürlich auch auf den Oberflächen aller anderen Himmelskörper durchführbar.

Es ist auch möglich, dass - gemäß den Darlegungen zu Fig. 4 - solche Detektorelemente 8a bis 8g, die aufgrund geringer relativer Lageabweichungen ΔLᵢ gemeinsam getriggert werden und eng benachbart sind, jeweils gemeinsame Signalleitungen 12 aufweisen, durch die je eine Gruppe 7 von Objektpunkten iₘₙ gemessen werden kann.

Die Anordnung der Detektorelemente in Bezug auf die erste und die zweite Scanrichtung SR1 und SR2 kann in weiteren Ausführungen der Erfindung auch anders, z. B. schräg, gewinkelt oder gebogen, erfolgen.

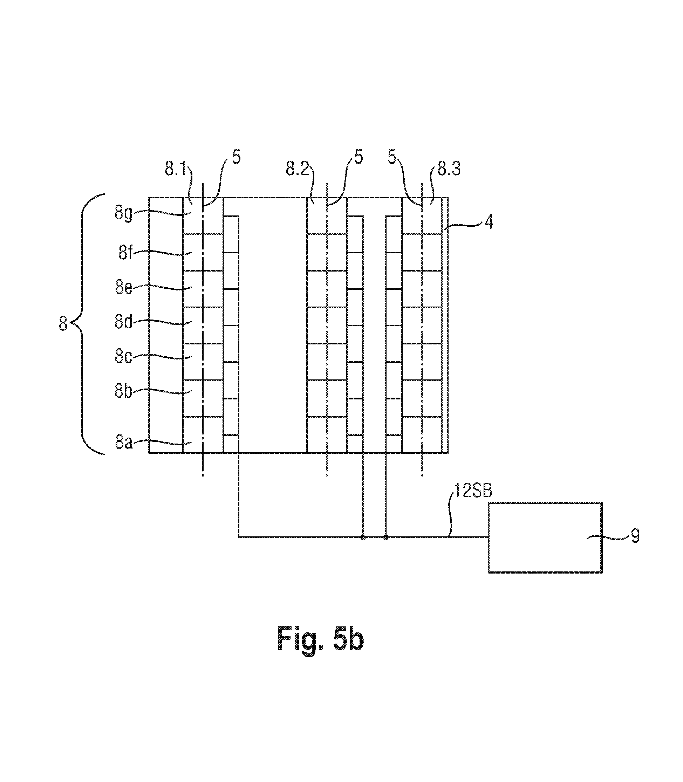

In einer weiteren Ausführung der Vorrichtung gemäß Fig. 5b sind die einzelnen Detektorelemente 8a bis 8g einzeln adressierbar ausgeführt und über einen gemeinsamen Signalbus 12SB mit der Detektorsteuerung 9 verbunden. Die einzelnen Detektorelemente 8a bis 8g der Zeilendetektoren 8.1 bis 8.3 sind mittels adressierter Signale sowohl einzeln und unabhängig voneinander als auch in Gruppen gemeinsam triggerbar. Ferner kann über den Signalbus 12SB jedem Detektorelement 8a bis 8g oder jeder Gruppe von Detektorelementen 8a bis 8g entsprechend der Ansteuerungsfunktion A(ΔLᵢ) eine zeitliche Verzögerung zugewiesen werden, entsprechend der ein jeweiliger Triggerzeitpunkt gegenüber einem gemeinsamen Triggersignal (Steuersignal) verschoben wird.

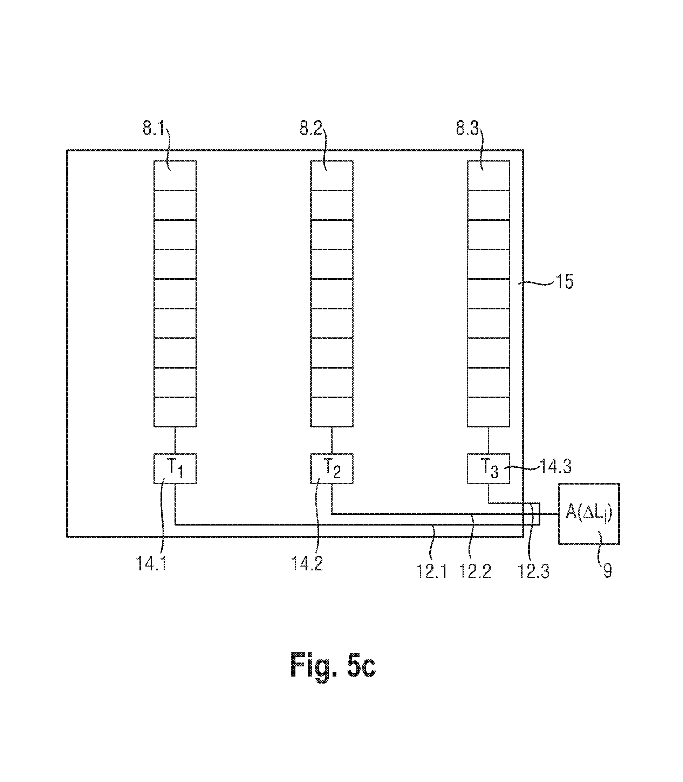

Um die Detektorelemente 8a bis 8g der Zeilendetektoren 8.1 bis 8.3 anzusteuern, ist in einer weiteren Ausführung der Vorrichtung - wie in Fig. 5c gezeigt - jeder Zeilendetektor 8.1 bis 8.3 auf einem Chip 15 (= integrierte Schaltung) angeordnet und über je ein Verzögerungsglied 14.1 bis 14.3 und je eine Signalleitung 12.1 bis 12.3 mit der Detektorsteuerung 9 verbunden. Jedes Verzögerungsglied 14.1 bis 14.3 bewirkt eine für den Zeilendetektor 8.1 bis 8.3 spezifische und programmierbare Verzögerung T1 bis T3 der von der Detektorsteuerung 9 an die einzelnen Zeilendetektoren 8.1 bis 8.3 gesendeten Steuersignale. Ein von der Detektorsteuerung 9 gleichzeitig an alle Zeilendetektoren 8.1 bis 8.3 gesendetes Steuersignal wird in Abhängigkeit von der Ansteuerungsfunktion A(ΔLᵢ) daher verzögert und die Zeilendetektoren 8.1 bis 8.3 werden jeweils zu einem definierten Triggerzeitpunkt individuell getriggert. Alle Detektorelemente 8a bis 8g eines Zeilendetektors 8.1 bis 8.3 werden jeweils gleichzeitig mit der programmierbaren Verzögerung T1 bis T3 getriggert.

In weiteren Ausführungen können Verzögerungsglieder 14.1 bis 14.3 vor jedem Detektorelement 8a bis 8g der Zeilendetektoren 8.1 bis 8.3 oder aber nur auf Signalleitungen 12 und 12.1 bis 12.3 einzelner Zeilendetektoren 8.1 bis 8.3 und/oder Detektorelemente 8a bis 8g vorhanden sein. Ferner können Verzögerungsglieder auch Gruppen 7 von Objektpunkten iₘₙ logisch zugeordnet sein. Die Detektorsteuerung 9 kann ebenfalls auf dem Chip 15 angeordnet sein. Auch können einzelne oder alle Verzögerungsglieder 14.1 bis 14.3 außerhalb des Chips 15 angeordnet sein.

Es soll das dem Bildpunkt Bₘ₇ (aus Gründen der Übersichtlichkeit hier nicht gezeigt) des Objektpunktes iₘ₇ zugeordnete Aufnahmefeld 6 (ausgefüllter Kreis) während seines Durchlaufs durch die Bildebene 4 in Richtung der ersten Scanrichtung SR1 betrachtet werden, um die Durchführung von Messungen mit der Ausführung der Vorrichtung gemäß Fig. 5a zu erläutern.

Für die jeweiligen Zeilendetektoren 8.1 bis 8.3 werden spezifische Ansteuerungsfunktionen A(ΔLᵢ) nach den oben beschriebenen Schritten generiert und in dem Speicher 10 in wiederholt abrufbarer Form abgespeichert. Aufgrund von systematisch bedingten Aufnahmefehlern eilt das Aufnahmefeld 6 gegenüber der linearen Messlinie 5 des ersten Zeilendetektors 8.1 voraus, weist also eine relative Lageabweichung ΔLᵢ mit einem positiven Vorzeichen auf. Die Messung 5 des Objektpunkts iₘ₇ wird daher durch die Detektorsteuerung 9 zu einem Triggerzeitpunkt ausgelöst, der zeitlich vor dem Zeitpunkt t₀ der Messlinie 5 des ersten Zeilendetektors 8.1 liegt, wenn das Aufnahmefeld 6 verfrüht mit der Messlinie 5 des ersten Zeilendetektors 8.1 zusammenfällt.

Entlang der Messlinie 5 des zweiten Zeilendetektors 8.2 sind keine systematisch bedingten Aufnahmefehler festgestellt worden. Die Messung wird daher zu einem Triggerzeitpunkt getriggert, der gleich dem Zeitpunkt t₀ der Messlinie 5 des zweiten Zeilendetektors 8.2 ist. Dabei wird jedes Detektorelement 8a bis 8g des zweiten Zeilendetektors 8.2 durch die Detektorsteuerung 9 und die jeweilige Signalleitung 12.1 bis 12.3 zwar einzeln angesteuert, aber die Messungen gleichzeitig getriggert.

Bei der Messlinie 5 des dritten Zeilendetektors 8.3 eilt das Aufnahmefeld 6 aufgrund von systematisch bedingten Aufnahmefehlern der Messlinie 5 des dritten Zeilendetektors 8.3 nach und weist eine relative Lageabweichung ΔLᵢ mit einem negativen Vorzeichen auf. Die Messung des Objektpunkts iₘ₇ wird daher durch die Detektorsteuerung 9 zu einem Triggerzeitpunkt ausgelöst, welcher zeitlich nach dem Zeitpunkt t₀ der Messlinie 5 des dritten Zeilendetektors 8.3 liegt und zu dem der Bildpunkt Bₘ₇ mit der Messlinie 5 des dritten Zeilendetektors 8.3 verspätet zur Überdeckung kommt. Auch die Detektorelemente 8a bis 8g des dritten Zeilendetektors 8.3 werden durch die Detektorsteuerung 9 und die jeweilige Signalleitung 12.1 bis 12.3 einzeln angesteuert und die Messung getriggert.

Durch jeden der Zeilendetektoren 8.1 bis 8.3 wird der Bildpunkt Bₘ₇ des Objektpunkts iₘ₇ je einmal gemessen (co-registriert), so dass insgesamt drei Messungen des Objektpunkts iₘ₇ vorliegen, in dem Speicher 10 gespeichert und für eine weitere Auswertung zur Verfügung gestellt werden. Diese beispielhafte Darstellung des Verfahrensschritts gilt natürlich für alle Bildpunkte Bₘₙ.

Es kann in weiteren Ausführungen der erfindungsgemäßen Vorrichtung eine andere Anzahl von Zeilendetektoren angeordnet sein. Die Zeilendetektoren 8.1 bis 8.3 können auch Teil einer Detektormatrix sein. In weiteren Ausführungsbeispielen können die Zeilendetektoren 8.1 bis 8.3 auch in Richtung der ersten Scanrichtung SR1 ausgerichtet sein. Die Messlinie 5 kann dann ebenfalls parallel der Zeilen m der Objektmatrix Oₘₙ verlaufen, die Messungen entlang der Messlinie 5 würden dann jedoch durch Detektorelemente 8a bis 8g erfolgen, die zu verschiedenen Zeilendetektoren 8.1 bis 8.3 gehören.

Die Zeilendetektoren 8.1 bis 8.3 können empfindlich für Strahlung von voneinander verschiedenen Spektralbereichen sein, so dass, insbesondere bei einer Co-registrierung, die einzelnen radiometrischen Messungen von Objektpunkten iₘₙ und/oder Zeilen m der Objektmatrix Oₘₙ können in verschiedenen Spektralbereichen erfolgen können.

Mit dem erfindungsgemäßen Verfahren und der erfindungsgemäßen Vorrichtungen können in einer Ausführung der Erfindung mit einem als rotierendem Scanner ausgebildeten Detektor Aufnahmefehler ausgeglichen werden, die trotz konstanter Rotationsrate des Scanners infolge einer Lage von Halbwinkelspiegeln des Scanners außerhalb einer Rotationsachse des Scanners entstehen.

Ferner können bei der Verwendung von Zeilendetektoren oder Arrays von Detektoren Aufnahmefehler senkrecht zur Scanrichtung ausgeglichen werden.

Das erfindungsgemäße Verfahren und die erfindungsgemäßen Vorrichtungen können in allen Anwendungen optisch abbildender Systeme verwendet werden, bei denen eine punktgenaue Messung erforderlich ist. Insbesondere ist die Erfindung für Anwendungen in den Bereichen der flugkörpergestützten Fernerkundung und der Meteorologie geeignet.

### Bezuggszeichenliste

- 1: Objekt
- 2: Objektszene
- 3: Optik
- 4: Bildebene
- 5: Messlinie
- 6: Aufnahmefeld
- 7a, 7a': Gruppen
- 7b, 7b': Gruppen
- 7c: Gruppe
- 8: Detektor
- 8.1: erster Zeilendetektor
- 8.2: zweiter Zeilendetektor
- 8.3: dritter Zeilendetektor
- 8a bis 8g: Detektorelemente
- 9: Detektorsteuerung
- 10: Speicher
- 11: Funktionsgenerator
- 12: Signalleitungen
- 12.1 bis 12.3: Signalleitungen
- 12SB: Signalbus
- 13: Antriebseinheit
- 14.1 bis 14.3: Verzögerungsglied
- 15: Chip
- SR1: erste Scanrichtung
- SR2: zweite Scanrichtung
- Oₘₙ: Objektmatrix
- m: Zeilen
- n: Spalten
- iₘₙ: Objektpunkt
- Bₘₙ: Bildpunkt
- ΔLᵢ: relative Lageabweichung
- F(ΔLᵢ): Fehlerfunktion
- A(ΔLᵢ): Ansteuerungsfunktion
- T1 bis T3: programmierbare Verzögerung
- Pᵢ: Punkt
- 4t: Zeitdifferenz
- t₀: Zeitpunkt
- v(t): Bewegungsgeschwindigkeit
- *v̅*(t): mittlere Bewegungsgeschwindigkeit

## Patentansprüche

1. Verfahren zur flugkörpergestützten korrigierten radiometrischen Messung von in einer Objektszene (2) vorhandenen Objektpunkten (iₘₙ) der Oberfläche eines Himmelskörpers, die bei einer systematisch in einer ersten Scanrichtung (SR1) und einer zweiten Scanrichtung (SR2) fortschreitenden Abtastung Zeilen (m) und Spalten (n) einer Objektmatrix (Oₘₙ) zugeordnet werden, wobei die Objektpunkte (iₘₙ) in einer Bildebene (4) auf einen Detektor (8) als Bildpunkte (Bₘₙ) abgebildet werden und die Bildpunkte (Bₘₙ) innerhalb der Bildebene (4) mit mindestens einem strahlungsempfindlichen Detektorelement (8a) des Detektors (8) aufgenommen werden, wobei durch das Detektorelement (8a) zu jedem Aufnahmezeitpunkt ein Aufnahmefeld (6) erfasst wird, **dadurch gekennzeichnet,**
- **dass** vor Beginn des Messvorgangs durch systematisch auftretende örtliche und zeitliche Änderungen einer Scanbewegung des Detektors (8) bedingte Aufnahmefehler des Detektors (8), bezogen auf Punkte Pᵢ einer Messlinie (5), entlang derer die Bildpunkte (Bₘₙ) aufgenommen werden, als relative Lageabweichungen (ΔLᵢ) des Aufnahmefeldes (6) von den Punkten Pᵢ der Messlinie (5), ermittelt werden,
- **dass** eine Ansteuerungsfunktion (A(ΔLᵢ)) auf Basis der relativen Lageabweichungen (ΔLᵢ) entlang der Messlinie (5) in Form von Triggerzeitpunkten, in denen Messungen der einzelnen Objektpunkte (iₘₙ) zeitlich unterschiedlich ausgelöst werden, generiert wird, wobei die Triggerzeitpunkte entlang der Messlinie (5) so definiert werden, dass die Messung jedes Objektpunkts (iₘₙ) dann erfolgt, wenn sein Bildpunkt (Bₘₙ) örtlich mit einem Aufnahmefeld (6) eines der Messlinie (5) zugeordneten Detektorelements (8a-8g) übereinstimmt und
- die Ansteuerungsfunktion (A(ΔLᵢ)) gespeichert und einer Detektorsteuerung (9) des Detektors (8) für aufeinanderfolgende Messungen entlang der Messlinie (5) zur Verfügung gestellt wird, so dass über die Messlinie (5) zeitsynchronisierte Messungen von allen Objektpunkten (iₘₙ) jeder Zeile der Objektmatrix (Oₘₙ) durchgeführt werden.

2. Verfahren nach Anspruch 1, **dadurch gekennzeichnet, dass** neben den systematisch auftretenden örtlichen und zeitlichen Änderungen einer Scanbewegung des Detektors (8) zusätzlich systemisch bedingte Abbildungsfehler des Detektors (8) durch die Ansteuerungsfunktion (A(ΔLᵢ)) berücksichtigt werden.

3. Verfahren nach Anspruch 1 oder 2, **dadurch gekennzeichnet, dass** Gruppen (7a, 7a'; 7b, 7b'; 7c) von ausgewählten Bildpunkten (Bₘₙ) gebildet werden, deren jeweilige Aufnahmefelder (6) relative Lageabweichungen (ΔLᵢ) aufweisen, die geringer als ein vorbestimmter Schwellwert sind und die Messungen der Objektpunkte (iₘₙ) einer Gruppe gleichzeitig getriggert werden.

4. Verfahren nach einem der vorhergehenden Ansprüche, **dadurch gekennzeichnet, dass** Messungen für dieselben Objektpunkte (iₘₙ) zeitlich aufeinanderfolgend mehrmals für verschiedene Messlinien (5) getriggert werden.

5. Verfahren nach Anspruch 4, **dadurch gekennzeichnet, dass** spontan auftretende Beiträge zu den relativen Lageabweichungen (ΔLᵢ) erfasst und bei der Generierung der Ansteuerungsfunktion (A(ΔLᵢ)) mit berücksichtigt werden.

6. Vorrichtung zur flugkörpergestützten korrigierten radiometrischen Messung von in einer Objektszene (2) vorhandenen Objektpunkten (iₘₙ) der Oberfläche eines Himmelskörpers, die bei einer systematisch fortschreitenden Abtastung Zeilen (m) und Spalten (n) einer Objektmatrix (Oₘₙ) zugeordnet sind, mit einer Optik (3), mit der die Objektpunkte (iₘₙ) auf einem in einer Bildebene (4) angeordneten Detektor (8) abgebildet sind, wobei Intensitäten der abgebildeten Objektpunkte (iₘₙ) als Bildpunkte (Bₘₙ) innerhalb der Bildebene (4) mit einem Detektor (8) mit mindestens einem strahlungsempfindlichen Detektorelement (8a bis 8g) zur Erzeugung einer systematisch fortschreitenden Abbildung der Objektmatrix (Oₘₙ) in Bildpunkten (Bₘₙ) aufnehmbar sind, wobei durch das Detektorelement (8a bis 8g) zu jedem Aufnahmezeitpunkt ein Aufnahmefeld (6) erfasst ist, **dadurch gekennzeichnet, dass**
- ein Speicher (10) zur Speicherung einer Ansteuerungsfunktion (A(ΔLᵢ)) vorhanden ist, wobei die Ansteuerungsfunktion (A(ΔLᵢ)) auf Basis von durch systematisch auftretende örtliche und zeitliche Änderungen einer Scanbewegung des Detektors (8) bedingte Aufnahmefehler erzeugt ist und die Aufnahmefehler als relative Lageabweichungen (ΔLᵢ) der Aufnahmefelder (6), bezogen auf eine Messlinie (5), ermittelt sind,
- der Speicher (10) mit einer Detektorsteuerung (9) verbunden ist, um aus der gespeicherten Ansteuerungsfunktion (A(ΔLᵢ)) in der Detektorsteuerung (9) Steuersignale für den Detektor (8) zu Triggerzeitpunkten zu generieren, wobei die Triggerzeitpunkte entlang der Messlinie (5) so definiert sind, dass die Messung jedes Objektpunkts (iₘₙ) dann erfolgt, wenn sein Bildpunkt (Bₘₙ) in der Bildebene (4) örtlich mit dem Aufnahmefeld (6) eines der Messlinie (5) zugeordneten Detektorelements (8a bis 8g) übereinstimmt und
- dass der Detektor (8) mit der Detektorsteuerung (9) verbunden ist, um jedes Detektorelement (8a bis 8g) für die Aufnahme eines betreffenden Bildpunkts (Bₘₙ) mit dem entsprechend definierten Triggerzeitpunkt anzusteuern.

7. Vorrichtung nach Anspruch 6, **dadurch gekennzeichnet, dass** jedes Detektorelement (8a bis 8g) über eine separate Signalleitung (12) mit der Detektorsteuerung (9) verbunden ist, sodass jedes Detektorelement (8a bis 8g) individuell triggerbar ist.

8. Vorrichtung nach Anspruch 6, **dadurch gekennzeichnet, dass** jeweils Gruppen von Detektorelementen (8a bis 8g) des Detektors (8) mit der Detektorsteuerung (9) über jeweils eine Signalleitung (12, 12.1 bis 12.3) verbunden sind, wodurch innerhalb der Gruppen die Messung mehrerer Objektpunkte (iₘₙ) gleichzeitig triggerbar ist.

9. Vorrichtung nach Anspruch 7 oder 8, **dadurch gekennzeichnet, dass** auf mindestens einer Signalleitung (12, 12.1 bis 12.3) mindestens ein Verzögerungsglied (14.1 bis 14.3) angeordnet ist, um ein von der Detektorsteuerung (9) gesendetes Steuersignal in Abhängigkeit von der Ansteuerungsfunktion (A(ΔLᵢ)) zu verzögern.

10. Vorrichtung nach Anspruch 9, **dadurch gekennzeichnet, dass** das mindestens eine Verzögerungsglied (14.1 bis 14.3) auf eine bestimmte Verzögerung (T1 bis T3) einstellbar ist.

11. Vorrichtung nach Anspruch 8, **dadurch gekennzeichnet, dass** der Detektor (8) mit der Detektorsteuerung (9) über einen Signalleitungsbus (12SB) verbunden ist und adressierbare Detektorelemente (8a bis 8g) aufweist, die mittels adressierter Signale einzeln oder in Gruppen triggerbar sind.

12. Vorrichtung nach Anspruch 6, **dadurch gekennzeichnet, dass** Linsen und strahlablenkende Elemente der Optik (3) als magnetische Linsen und elektrostatische strahlablenkende Elemente ausgebildet sind und der Detektor (8) zur Detektion von Teilchenstrahlung geeignet ist.

13. Verwendung des Verfahrens nach einem der Ansprüche 1 bis 5 in einer integrierten Schaltung, bei der jedes Detektorelement (8a bis 8g) des Detektors (8) über je eine Signalleitung (12, 12.1 bis 12.3) mit einer Detektorsteuerung (9) verbunden und jedes Detektorelement (8a bis 8g) einzeln triggerbar ist.

14. Verwendung des Verfahrens nach einem der Ansprüche 1 bis 5 in einer integrierten Schaltung, bei der jeweils Gruppen von Detektorelementen (8a bis 8g) des Detektors (8) mit der Detektorsteuerung (9) über jeweils eine Signalleitung (12, 12.1 bis 12.3) verbunden sind, wodurch innerhalb der Gruppen die Messung mehrerer Objektpunkte (iₘₙ) gleichzeitig triggerbar ist.

15. Verwendung nach einem der Ansprüche 13 oder 14, **dadurch gekennzeichnet, dass** auf mindestens einer Signalleitung (12, 12.1 bis 12.3) mindestens ein Verzögerungsglied (14.1 bis 14.3) angeordnet ist, um ein von der Detektorsteuerung (9) gesendetes Steuersignal in Abhängigkeit von der Ansteuerungsfunktion (A(ΔLᵢ)) zu verzögern.
